# EUROPÄISCHE PATENTSCHRIFT

(11) **EP 3 367 541 B1**
(45) Veröffentlichungstag und Bekanntmachung des Hinweises auf die Patenterteilung: **07.04.2021**
(21) Anmeldenummer: 18156834.6
(22) Anmeldetag: 15.02.2018
(51) Int. Cl.: H02K 1/27, H02K 9/06

(54) **ROTOR EINES ELEKTROMOTORS**
ROTOR OF AN ELECTRIC MOTOR
ROTOR D'UN MOTEUR ÉLECTRIQUE

(30) Priorität: 23.02.2017 DE 102017103774; 30.06.2017 DE 102017114683
(43) Veröffentlichungstag der Anmeldung: 29.08.2018
(73) Patentinhaber: ebm-papst Landshut GmbH, 84030 Landshut (DE)
(72) Erfinder: Dannemann, Jan, 23730 Neustadt in Holstein (DE); Weltzer, Jan, 84036 Landshut (DE); Deininger, Martin, 84144 Geisenhausen (DE); Hertreiter, Martin, 84180 Loiching (DE); Schlopakowski, 84034 Landshut (DE)
(74) Vertreter: Staeger & Sperling Partnerschaftsgesellschaft mbB

(56) Entgegenhaltungen:
- EP-A1- 2 124 316
- EP-A2- 2 573 917
- DE-A1-102013 215 561
- JP-A- H0 965 614
- JP-A- H02 174 528
- JP-A- 2002 010 545
- JP-A- 2002 136 051
- JP-A- 2003 037 953
- JP-A- 2008 160 973
- US-A1- 2007 014 677
- US-A1- 2007 024 131
- US-A1- 2011 025 159
- US-A1- 2016 006 303

## Beschreibung

Die Erfindung betrifft einen Rotor eines Elektromotors, insbesondere zum Antrieb von Gebläsen, insbesondere von Vormischgebläsen für Gas und Luft.

Im Stand der Technik ist es bekannt, bei gattungsbildenden Rotoren den Läufer, d.h. den Magneten, durch eine Kunststoffumspritzung auf der Welle zu befestigen. Druckschriftlicher Stand der Technik ist beispielsweise in den Dokumenten DE 10 2013 215 561 A1, US 2016/006303 A1 und JP 2008/160973 A offenbart.

Ziel der Erfindung ist es, das rotierende Bauteil Rotor gleichzeitig als Element zu nutzen, das einen Kühlluftstrom erzeugt und diesen Rotor kompakt und mit möglichst geringer Teilezahl auszubilden. Dabei soll weiterhin das Kunststoffspritzverfahren eingesetzt und eine Entformbarkeit in eine axiale Richtung gewährleistet werden.

Diese Aufgabe wird gelöst durch einen Merkmalskombination gemäß Patentanspruch 1.

Erfindungsgemäß wird ein Rotor eines Elektromotors mit den Merkmalen des Anspruchs 1 vorgeschlagen, u.a. mit einer Welle und einem auf der Welle angeordneten Magneten, wobei der Magnet mit einem Kunststoff auf die Welle gespritzt befestigt ist und der Kunststoff einen Kühlflügel ausbildet, der im Betrieb des Rotors einen Kühlluftstrom erzeugt.

Dabei ist vorteilhaft, dass der ohnehin für die Befestigung zwischen Magnet und Welle im Spritzgussverfahren eingespritzte Kunststoff zusätzlich dazu verwendet wird, den Kühlflügel auszubilden. Dadurch entfallen Montageschritte zur Befestigung eines Kühlflügels an dem Rotor. Ferner können die Teilezahl und die Herstellungskosten reduziert werden.

Der Kühlflügel eignet sich an dem Rotor zur Kühlung der häufig an den Rotor angrenzend verbauten Motorelektronik, so dass im Betrieb des Rotors durch den Kühlflügel ein definierter Kühlluftstrom auf die Motorelektronik geleitet werden kann. In jedem Fall wird eine Strömung erzeugt, die einem Wärmestau entgegenwirkt.

In einer erfindungsgemäßen Ausführungsvariante des Rotors weist der Kühlflügel eine Vielzahl von Kühlschaufeln auf, die in Umfangsrichtung einen Schaufelkranz bilden. Der Kühlflügel ist dadurch wie ein Gebläserad ausgebildet und kann eine definierte und gerichtete Kühlluftströmung erzeugen.

Ferner ist eine Ausführung günstig, bei der die axialen Stirnseiten der Kühlschaufeln vollständig frei und unbedeckt sind. Dabei ist insbesondere vorteilhaft, dass der Kühlflügel in eine axiale Richtung entformbar ist, so dass wie im Stand der Technik üblich, ein einfaches Spritzgusswerkzeug verwendet werden kann.

Zur Erhöhung der Kühlleistung ist erfindungsgemäß bei dem Rotor vorgesehen, dass die Kühlschaufeln in einer axialen Draufsicht gesehen gekrümmt, insbesondere vorwärts- oder rückwärtsgekrümmt, verlaufend ausgebildet sind.

Eine erfindungsgemäße Ausführung des Rotors sieht vor, dass der Kühlflügel einstückig einen mittelbar oder unmittelbar an den Magneten angrenzenden Wuchtrand aufweist. Über den Wuchtrand kann vorteilhafterweise eine Unwucht des Rotors ausgeglichen und ein schwingungsarmer Betrieb mit höheren Drehzahlen erreicht werden. Bei dem Wuchtrand werden in Ausführungsvarianten eine Einfräsung oder Aussparung oder eine Wuchtmasse vorgesehen. Die lokal fehlende Masse bei einer Einfräsung oder Aussparung bzw. die lokal zusätzliche Masse durch die Wuchtmasse dienen als Wuchtausgleich.

Erfindungsgemäß ist ein Ausführungsbeispiel des Rotors, bei dem der Kühlflügel und der Magnet in axialer Richtung unmittelbar aneinander angrenzend angeordnet sind. Insbesondere ist der Wuchtrand unmittelbar an den Magneten, der zumeist den wesentlichen Anteil an der Unwucht beiträgt, angrenzend vorgesehen werden.

In einer Ausführung des Rotors ist ferner vorgesehen, dass der Kühlflügel ein axiales freies Ende des Rotors bestimmt. Auch das dient zur einfachen Entformbarkeit und Erzeugung des Kühlluftstroms am axialen Randabschnitt.

Bei dem Rotor wird der Magnet mit dem Kunststoff, der den Kühlflügel ausbildet, auf die Welle gespritzt befestigt. Bei dem Rotor bilden der Kühlflügel, der Magnet und die Welle eine durch den Kunststoff verbundene einteilige Einheit.

Zur Anbindung der Bauteile hat sich als vorteilhaft erwiesen, dass der Kunststoff den Magneten von beiden axialen Seiten zumindest abschnittsweise umschließt und damit an der Welle fixiert. Zwischen dem Magneten und der Welle ist in einer Weiterbildung ein Kanal ausgebildet, der eine Verbindung zwischen zwei gegenüberliegenden axialen Seiten des Magneten herstellt und somit eine axial zweiseitige Anbindung des Magneten gewährleistet. Der Kanal wird mit dem den Kühlflügel ausbildenden Kunststoff ausgefüllt.

In einer Weiterbildung des Rotors ist ferner vorgesehen, dass der Magnet auf einer dem Kühlflügel gegenüberliegenden Seite eine Aussparung aufweist, die mit dem den Kühlflügel ausbildenden Kunststoff ausgefüllt ist. Die axiale Aussparung bietet die Möglichkeit einer axial planen Fläche des Magneten und mithin einer verbesserten Anbindungsmöglichkeit an weitere Bauteile.

Die Erfindung umfasst ferner einen Elektromotor mit einem vorstehendbeschriebenen Rotor.

Andere vorteilhafte Weiterbildungen der Erfindung werden nachstehend zusammen mit der Beschreibung der bevorzugten Ausführung der Erfindung anhand der Figuren näher dargestellt. Es zeigen:
- Fig. 1: ein Ausführungsbeispiel eines erfindungsgemäßen Rotors;
- Fig. 2: eine Schnittansicht des Rotors aus Fig. 1.

Gleiche Bezugszeichen benennen gleiche Teile in allen Ansichten. Alle offenbarten Merkmale sind beliebig kombinierbar soweit dies technisch möglich und nicht widersprüchlich ist.

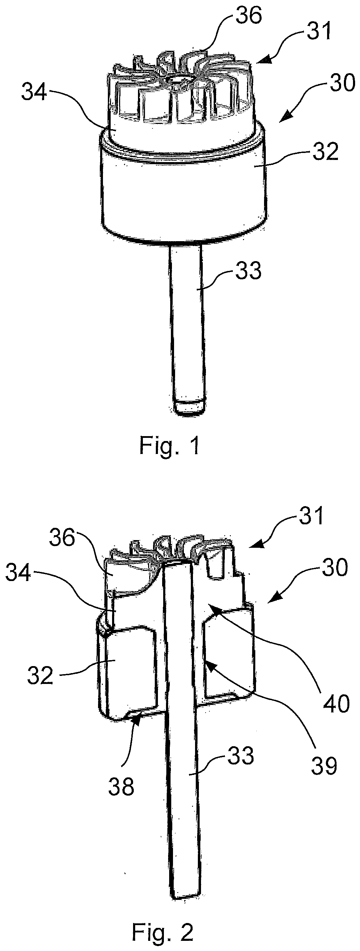

Figur 1 zeigt eine perspektivische, Figur 2 eine Schnittansicht eines Rotors 30 eines Elektromotors mit einer Welle 33, einem auf der Welle 33 angeordneten Magneten 32, der mit einem Kunststoff 40 auf die Welle 33 gespritzt befestigt ist. Der Kunststoff 40 bildet gleichzeitig, d.h. einstückig einen Kühlflügel 31 mit einer Vielzahl von in Umfangsrichtung gekrümmt ausgebildeten Kühlschaufeln 36 aus, die in Umfangsrichtung beabstandet als Schaufelkranz angeordnet sind. Die jeweilige axiale Stirnseite der Kühlschaufeln 36 ist vollständig frei und unbedeckt. Der Kühlflügel 31 und der Rotor 30 sind in eine axiale Richtung entformbar.

Der Kühlflügel 31 entspricht einem an dem Magneten 32 angeordneten Gebläserad. Im Betrieb des Rotors 30 erzeugen die Kühlschaufeln 36 einen Kühlluftstrom zur Kühlung einer angrenzend anordenbaren Motorelektronik.

Der Kühlflügel 31 weist einen unmittelbar an den Magneten 32 angrenzenden Wuchtrand 34 auf, durch den eine Unwucht des Rotors 30 beispielsweise durch eine Einfräsung ausgleichbar ist. Die Größe des Wuchtrands ist variabel, jedoch ist die axiale Länge der Kühlschaufeln 36 in der gezeigten Ausführung größer als die axiale Länge des Wuchtrands 34. Der maximale Außendurchmesser des Kühlflügels 31 ist etwas geringer als derjenige des Magneten 32.

Der gesamte Rotor ist als integrale einteilige Einheit ausgebildet. Zwischen dem Magneten 32 und der Welle 33 ist der Kanal 39 ausgebildet und stellt die Verbindung zwischen den zwei gegenüberliegenden axialen Seiten des Magneten 32 her. Auf der dem Kühlflügel 31 gegenüberliegenden Seite weist der Manet 32 die Aussparung 38 auf, in die der Kunststoff 40 eindringen kann und mit dem Magneten 32 eine plane Axialfläche ausbildet. Gleichzeitig fixiert der Kunststoff 40 in der Aussparung 38 den Magneten 32 in axialer Richtung an der Welle 33. Auf der der Aussparung 38 gegenüberliegenden axialen Seite wird der Magnet 32 über den Kühlflügel 31, insbesondere seinen Wuchtrand 34 fixiert. Der Kunststoff 40 umschließt den Magneten 32 von beiden axialen Seiten. Der Kanal 39 ist ebenfalls mit dem den Kühlflügel 31 ausbildenden Kunststoff 40 ausgefüllt. Die Fixierung erfolgt im Spritzgussverfahren. Als Kunststoff können aus dem Stand der Technik bekannte Materialien verwendet werden.

## Patentansprüche

1. Rotor (30) eines Elektromotors mit einer Welle (33) und einem auf der Welle (33) angeordneten Magneten (32), wobei der Magnet (32) mit einem Kunststoff (40) auf die Welle (33) gespritzt befestigt ist und der Kunststoff einen Kühlflügel (31) ausbildet, der im Betrieb des Rotors (30) einen Kühlluftstrom erzeugt, wobei der Kühlflügel eine Vielzahl von Kühlschaufeln (36) aufweist, die einen Schaufelkranz bilden und in einer axialen Draufsicht gesehen gekrümmt verlaufend ausgebildet sind, wobei der Kühlflügel (31) und der Magnet (32) in axialer Richtung unmittelbar aneinander angrenzend angeordnet sind, wobei ein maximaler Außendurchmesser des Kühlflügels (31) etwas geringer ist als derjenige des Magneten (32), und wobei der Kühlflügel (31) einen unmittelbar an den Magneten (32) angrenzenden Wuchtrand (34) aufweist.

2. Rotor nach Anspruch 1, **dadurch gekennzeichnet, dass** axiale Stirnseiten der Kühlschaufeln (36) vollständig frei und unbedeckt sind.

3. Rotor nach einem der vorigen Ansprüche, **dadurch gekennzeichnet, dass** der Kühlflügel (31) in eine axiale Richtung entformbar ist.

4. Rotor nach dem Anspruch 1, **dadurch gekennzeichnet, dass** der Wuchtrand mindestens eine Einfräsung oder Aussparung oder eine Wuchtmasse aufweist.

5. Rotor nach einem der vorigen Ansprüche, **dadurch gekennzeichnet, dass** der Kühlflügel (31) ein axiales freies Ende des Rotors (30) bestimmt.

6. Rotor nach einem der vorigen Ansprüche, **dadurch gekennzeichnet, dass** der Magnet (32) mit dem Kunststoff (40), der den Kühlflügel (31) ausbildet, auf die Welle (33) gespritzt befestigt ist.

7. Rotor nach einem der vorigen Ansprüche, **dadurch gekennzeichnet, dass** der Kühlflügel (31), der Magnet (32) und die Welle (33) eine durch den Kunststoff verbundene einteilige Einheit bilden.

8. Rotor nach einem der vorigen Ansprüche, **dadurch gekennzeichnet, dass** der Kunststoff den Magneten (32) von beiden axialen Seiten zumindest abschnittsweise umschließt und damit an der Welle (33) fixiert.

9. Rotor nach einem der vorigen Ansprüche, **dadurch gekennzeichnet, dass** zwischen dem Magneten (32) und der Welle (33) ein Kanal (39) ausgebildet ist, der eine Verbindung zwischen zwei gegenüberliegenden axialen Seiten des Magneten (32) herstellt, und der mit dem den Kühlflügel (31) ausbildenden Kunststoff ausgefüllt ist.

10. Rotor nach einem der vorigen Ansprüche, **dadurch gekennzeichnet, dass** der Magnet (32) auf einer dem Kühlflügel (31) gegenüberliegenden Seite eine Aussparung (38) aufweist, die mit dem den Kühlflügel (31) ausbildenden Kunststoff (40) ausgefüllt ist.

11. Elektromotor mit einem Rotor (30) nach einem der vorigen Ansprüche.

## Claims

1. Rotor (30) of an electric motor having a shaft (33) and a magnet (32) arranged on the shaft (33), wherein said magnet (32) is attached to said shaft (33) by injection moulding with a plastic (40) and said plastic forms a cooling vane (31) which generates a cooling air flow during operation of said rotor (30), wherein said cooling vane has a plurality of cooling blades (36) which form a blade ring and are curved when viewed in an axial plan view, wherein said cooling vane (31) and said magnet (32) are arranged directly adjacent to each other in the axial direction, wherein a maximum outer diameter of said cooling vane (31) is slightly smaller than that of said magnet (32), and wherein said cooling vane (31) has a balancing edge (34) directly adjacent to said magnet (32).

2. Rotor according to claim 1, **characterized in that** axial end faces of said cooling blades (36) are completely free and uncovered.

3. Rotor according to one of the preceding claims, **characterized in that** said cooling vane (31) is demoldable in an axial direction.

4. Rotor according to claim 1, **characterized in that** said balancing edge has at least one milled recess or recess or a balancing mass.

5. Rotor according to one of the preceding claims, **characterized in that** said cooling vane (31) defines an axial free end of the rotor (30).

6. Rotor according to one of the preceding claims, **characterized in that** said magnet (32) is attached to said shaft (33) by injection molding with said plastic (40) forming said cooling vane (31).

7. Rotor according to one of the preceding claims, **characterized in that** said cooling vane (31), said magnet (32) and said shaft (33) form a one-piece unit connected by said plastic.

8. Rotor according to one of the preceding claims, **characterized in that** said plastic surrounds said magnet (32) from both axial sides at least in sections and thus fixes said magnet (32) to said shaft (33).

9. Rotor according to one of the preceding claims, **characterized in that** between said magnet (32) and said shaft (33) a channel (39) is formed, which establishes a connection between two opposite axial sides of said magnet (32), and which is filled with the plastic forming said cooling vane (31).

10. Rotor according to one of the preceding claims, **characterized in that** said magnet (32) has a recess (38) on a side opposite to said cooling vane (31), said recess being filled with said plastic material (40) forming said cooling vane (31).

11. Electric motor having a rotor (30) according to any one of the preceding claims.

## Revendications

1. Rotor (30) d'un moteur électrique avec un arbre (33) et un aimant (32) agencé sur l'arbre (33), dans lequel l'aimant (32) est fixé par injection sur l'arbre (33) avec un plastique (40) et le plastique forme une ailette de refroidissement (31), qui génère un courant d'air de refroidissement lors du fonctionnement du rotor (30), dans lequel l'ailette de refroidissement présente une pluralité d'aubes de refroidissement (36), qui forment une couronne d'aubes et sont réalisées de manière incurvée vu dans une vue de dessus axiale, dans lequel l'ailette de refroidissement (31) et l'aimant (32) sont agencés directement adjacents l'un à l'autre dans la direction axiale, dans lequel un diamètre extérieur maximum de l'ailette de refroidissement (31) est un peu plus petit que celui de l'aimant (32), et dans lequel l'ailette de refroidissement (31) présente un bord d'équilibrage (34) directement adjacent à l'aimant (32).

2. Rotor selon la revendication 1, **caractérisé en ce que** des côtés frontaux axiaux des aubes de refroidissement (36) sont entièrement libres et découverts.

3. Rotor selon l'une quelconque des revendications précédentes, **caractérisé en ce que** l'ailette de refroidissement (31) est démoulable dans une direction axiale.

4. Rotor selon la revendication 1, **caractérisé en ce que** le bord d'équilibrage présente au moins une entaille ou un évidement ou une masse d'équilibrage.

5. Rotor selon l'une quelconque des revendications précédentes, **caractérisé en ce que** l'ailette de refroidissement (31) détermine une extrémité libre axiale du rotor (30).

6. Rotor selon l'une quelconque des revendications précédentes, **caractérisé en ce que** l'aimant (32) est fixé par injection sur l'arbre (33) avec le plastique (40), qui forme l'ailette de refroidissement (31).

7. Rotor selon l'une quelconque des revendications précédentes, **caractérisé en ce que** l'ailette de refroidissement (31), l'aimant (32) et l'arbre (33) forment une unité monobloc reliée par le plastique

8. Rotor selon l'une quelconque des revendications précédentes, **caractérisé en ce que** le plastique entoure l'aimant (32) des deux côtés axiaux au moins par section et le fixe ainsi au niveau de l'arbre (33).

9. Rotor selon l'une quelconque des revendications précédentes, **caractérisé en ce qu'**un canal (39), qui établit une liaison entre deux côtés axiaux opposés de l'aimant (32), et qui est rempli du plastique formant l'ailette de refroidissement (31), est réalisé entre l'aimant (32) et l'arbre (33).

10. Rotor selon l'une quelconque des revendications précédentes, **caractérisé en ce que** l'aimant (32) présente sur un côté opposé à l'ailette de refroidissement (31) un évidement (38), qui est rempli du plastique (40) formant l'ailette de refroidissement (31).

11. Moteur électrique avec un rotor (30) selon l'une quelconque des revendications précédentes.
